# EUROPEAN PATENT SPECIFICATION

(11) **EP 1 885 101 B1**
(45) Date of publication and mention of the grant of the patent: **08.10.2008**
(21) Application number: 06291257.1
(22) Date of filing: 01.08.2006
(51) Int. Cl.: H04L 29/12, H04L 29/08

(54) **Method of providing a telecommunication service by dynamically controlling query responses**
Methode zur Bereitstellung eines Telekommunikationsdienstes durch dynamische Kontrolle von Anfrage Rückmeldungen
Procédé pour fournir un service de télécommunication par contrôle des réponses aux requêtes

(43) Date of publication of application: 06.02.2008
(73) Proprietor: Alcatel Lucent, 75008 Paris (FR)
(72) Inventor: Drewniok, Marc, 70376 Stuttgart (DE); Sienel, Jürgen, 71229 Leonberg (DE)
(74) Representative: Schmidt, Werner Karl

(56) References cited:
- EP-A- 1 575 246
- EP-A2- 0 817 444
- COLAJANNI M ET AL: "A performance study of robust load sharing strategies for distributed heterogeneous Web server systems" IEEE TRANSACTIONS ON KNOWLEDGE AND DATA ENGINEERING, IEEE SERVICE CENTER, LOS ALAMITOS, CA, US, vol. 14, no. 2, March 2002 (2002-03), pages 398-414, XP002333859 ISSN: 1041-4347

## Description

The present invention relates to a method of providing a telecommunication service, in particular a telecommunication service related to an Internet Protocol query message, and a server and a computer program product to execute said method.

The Dynamic Delegation Discovery System (= DDDS) is used to implement lazy binding of strings to data, in order to support dynamically configured delegation systems. The DDDS functions by mapping some unique string to data stored within a DDDS Database by iteratively applying string transformation rules until a terminal condition is reached. With DDDS it is possible to realize a distributed database. One such example is the Domain Name System (= DNS).

The DNS is a system that stores information about hostnames and domain names in a kind of distributed database on networks, such as the Internet. Most importantly, it provides a physical location (IP address) for each hostname, and lists the mail exchange servers accepting e-mail for each domain (IP = Internet Protocol). ENUM (= Telephone Number Mapping) is a term that has been adopted to describe a DNS-based mechanism developed by the IETF under the reference RFC 2916bis and which maps E.164 numbers into URIs (IETF = Internet Engineering Task Force; RFC = Request for Comments; URI = Universal Resource Identifier).

A feature of such a distributed database is the caching mechanism. It reduces the network load related to network requests and considerably increases the speed of the lookup process. When a client requests a certain database entry it starts a request towards the distributed database system. If the entry is found, the response is returned to the requestor. The response itself has to be routed to the requestor and therefore may pass through several servers. These servers cache this response and, if there is the same request once more, they already know the response and can return it.

Via ENUM, an E.164 number can be used as a single front-end to a variety of communication identities by which an end user can be contacted, including those used for phone, fax and email. This enables users who are the recipient of communications to indicate the means by which they wish to be contacted through a single number.

ENUM uses what are called Naming Authority Pointer (= NAPTR) Resource Records in order to identify a URI for contacting a specific node identified through an E.164 number. A specific type of NAPTR record service with the mnemonic "E2U" (E.164 to URI resolution) which is defined and used by ENUM. The result of an ENUM query can be one or more URIs which are then used to reference resources or services associated with the E.164 number. Possible examples of resources or services include, among others, fax number, mobile number, email address, Internet home page address.

The address where a request has to be sent to for looking up a list of resources or services associated with an E.164 number is obtained from the conversion of the E.164 number into an internet domain name. The principle of this conversion is to reverse the direction of reading the E.164 number, to separate each digit by a dot (".") - each digit representing a separate "zone" - and then finally to add the name of the ENUM zone (e164.arpa) to obtain a fully qualified domain name.

One feature of the DNS system is the ability to reduce network traffic and speed up lookup processes by caching entries. The time period an entry is cached depends on the time-to-live (= TTL) parameter. It indicates the time period an entry is cached. After this period the other servers will "forget" the entry and route the request again to the corresponding server.

If an entry is changed, a client will not notice this change until all previously cached values are expired. Especially frequent changes will cause irritation. Setting the TTL value to a very short time period results in limiting the scalability of the system. This will not work for scenarios with a certain amount of clients that start requests, because each request has to be routed to the final server.

The documents XP2333859 and EP 0 817 444 A2 disclose methods to dynamically control TTL parameters.

Approaches known in the prior art represent dedicated solutions that are operator dependent. Moreover the operator has more management work to do which reduces the usability of the services. And, the maintenance of the applications requires a high CAPEX and OPEX (CAPEX = Capital Expenditure; OPEX = Operational Expenditure).

It is the object of the present invention to provide an enhanced telecommunication service.

The object of the present invention is achieved by a method of providing a telecommunication service within telecommunication networks adapted for communication using an Internet protocol, the method comprising the steps of sending an internet protocol query message to query information associated with a target telecommunication network from a distributed information system, receiving in response to the internet protocol query message a uniform resource indicator associated with the target telecommunication network, and invoking a telecommunication service from the target telecommunication network using the uniform resource indicator, wherein the method comprises the further step of controlling a time-to-live value of the requested information for a caching or a replication mechanism of the distributed information system dynamically by using personalized information related to the requested information. Furthermore, the object of the present invention is achieved by a server for providing a telecommunication service within telecommunication networks adapted for communication using an internet protocol, the server comprising an interface adapted to receive an Internet protocol query message to query information associated with a target telecommunication network from a distributed information system and a control unit adapted to provide in response to the Internet protocol query message a uniform resource indicator associated with the target telecommunication network wherein said uniform resource indicator is used for invoking a telecommunication service from the target telecommunication network, wherein the control unit is further adapted to control dynamically a time-to-live value of the requested information for a caching or a replication mechanism of the distributed information system by using personalized information related to the requested information. And the object of the present invention is achieved by a computer program product for providing a telecommunication service within telecommunication networks adapted for communication using an Internet protocol, whereby the computer program product, when executed by a server, performs the steps of sending an Internet protocol query message to query information associated with a target telecommunication network from a distributed information system, receiving in response to the Internet protocol query message a uniform resource indicator associated with the target telecommunication network, and invoking a telecommunication service from the target telecommunication network using the uniform resource indicator, whereby the computer program product performs the further step of controlling a time-to-live value of the requested information for a caching or a replication mechanism of the distributed information system dynamically by using personalized information related to the requested information.

The present invention provides a way to easily amend, add or update, in a personalized and individual manner, details of communications identities held in a mapping entry without changing the number used for access.

This invention enables enhancement of a telecommunication system by providing additional information within a distributed and cross-operator address mapping system, to allow new services like constraint based automatic call redirection, cross operator call delivery, personalized ringing and ring-back tones and many more. The big advantage is that the services will be available through all user subscription at different operators. This is achieved by re-using the mechanisms of distributed database systems as provided by, e.g., DNS with significant enhancements.

The present invention uses a well-established mapping system such as ENUM to allow a personalization of communication services in a cross operator environment. This includes an extension of the current mapping service and enhanced routing mechanisms for a distributed information system, such as the DNS architecture. Thus, the features of the mapping service are extended and this in a cross operator environment.

In addition to the prior art storage of user subscriptions like fax number, fixed phone number, and mobile phone number, the extended address mapping, service according to the present invention provides information for the call initiation. With the new extension, the mapping service can be used to store a global user profile and have it accessible for everyone in the internet. The advantage is that the user needs to manage his settings only once and everyone can make use of them.

The invention allows to use a DDDS also for occasionally and frequently changing entries in a distributed database system, in this case in the context of a mapping system such as ENUM. That expands a standardized and established system and allows to benefit from its features for new services with new requirements.

Generally, the invention can be applied to any mapping system where a first address or information is to be mapped to another address or information. In particular, the invention is suited for use within the ENUM system.

Further advantages are achieved by the embodiments of the invention indicated by the dependent claims.

According to a preferred embodiment of the invention, a global user profile of a specific user can be stored in a memory of the server and be accessible for anyone using the Internet. It is possible that a user sets up a user profile by himself and stores the user profile in the memory of the server. It is also possible that user-specific data, e.g., behavioural data of a user, for a user profile of the user is gathered by the server and that the server stores the gathered data as a user profile for use according to the present invention. When a query message requesting information arrives at the server, the server retrieves the user profile related to the requested information. In correspondance with the user profile, the server adapts the TTL value associated with the requested information and applies the adapted TTL value to: the requested information. The adapted requested information may then be sent to the requesting entity.

Preferably, when an IP query message arrives at the server, a user profile associated with the corresponding telephone number mapping entry is determined, e.g., from a user profile database. The user profile comprises: personalized information. The personalized information provides the basis for the creation of a suitable response to an IP query message. For instance, if the personalized information comprises a timetable schedule with different locations of the user associated with the user profile, the server determines the currently valid location of the user and selects the appropriate URI from the mapping entry.

According to another preferred embodiment of the invention, the server dynamically adjusts the TTL value of a mapping entry on the server based on said personalized information. When an Internet protocol query message related to the mapping entry is routed from a requesting entity to the server and finally received at said server, the server replies to said query message by sending the mapping entry with the adjusted TTL value to the requesting entity. At the same time, the server initiates the caching of the mapping entry on the one or more routing servers that "lie on the route" between the server and the requesting entity. This is possible since the Internet protocol query message related to the mapping entry may be routed by servers of the distributed information system, usually via one or more routing servers. In a preferred embodiment, the mapping entry is an ENUM entry.

The one or more routing servers keep the mapping entry in their caches during a time period indicated by the TTL value. An Internet protocol query message related to the cached mapping entry which is sent to the server may pass one or more of the routing servers holding the mapping entry in their cache. Then a routing server will recognize the Internet protocol query message as related to the cached mapping entry, terminate the internet protocol query message and send the cached mapping entry to the entity where the internet protocol query message originated.

After the time period indicated by the TTL value has expired, the one or more routing servers will delete the corresponding mapping entry from their cache and route another Internet protocol query message to the server holding the original ENUM entries.

According to another preferred embodiment of the invention, said personalized information reflects an observed user behaviour or a behavioural pattern of a user or a user policy. It is possible that the server observes the behaviour of a user and this way gathers user behavioural data. Preferably, the behavioural data allows to deduct a specific behavioural pattern that can be used for decisions about when changes in the personalized information are to be expected. It is also possible that a user himself provides the system with, preferrably time-dependent, behavioural data and/or user policies and/or user preferences.

In a preferred embodiment, the distributed information system is a Dynamic Delegation Discovery System or a Domain Name System. Then, the IP query message may be an ENUM query and the requested information may be an mapping entry maintained on a DNS server. The result of the ENUM query can be one or more URIs which are then used to reference resources or services associated with the E.164 number.

According to another preferred embodiment of the invention, the setting of the time-to-live value is done dynamically according to a fitting algorithm. The fitting algorithm may provide a prediction concerning the validity of an entry. The system may vary the TTL value within a range between a miminum value and a maximum value. According to the user profile comprising, e.g., the user habits known to the system, the system adjusts the TTL values. The system may also be able to learn the user habits. If the requested information, i.e., a URL given by a telephone number mapping entry, is not changed for a long time period, the system decides that it is a candidate for being a long-term entry. So the system may increase the TTL value associated with the entry periodically to the maximum value. On the other hand, if the entry is changed frequently, e.g., as the associated user changes his locations, the system will decrease the TTL value until it is at the minimum value.

Preferably, the personalized information provides data about individual ringtones and/or ringbacktones preferred by a user. Likewise, user preferences and/or user presence information may be comprised within the personalized information. Moreover, individualized routing information or individual black/white/gray lists may be implemented into a telecommunication service by help of the personalized information. All this personalized information is held within a data structure that assigns one or more values, e.g., an URI and a specific ringtone, to one or more constraints, e.g., time, invoking subscriber information, environmental information, or localization information. The environmental information may comprise information about, e.g., a terminal or a network access type used by a user.

Preferably, the time-to-live value is adjusted one or more times before a scheduled change of a Domain Name Server entry takes place. If a change in an entry is known to take place at a certain time, the TTL value can be adapted to respond to the imminent change.

Preferably, the invention is adapted to provide scheduled changes to a DNS entry, like a user profile. It is enabled to dynamically adjust the TTL value of an DNS entry - in this case an ENUM entry. If, e.g., the user profile specifies a change at 18.00h , the server holding the DNS entry will keep a TTL of 30 minutes until 17.30h. At this time, a dynamic update decreases the TTL to 5 minutes and at 17.55h to one minute. The advantage of this solution is that, on the one hand, the caching mechanisms of DNS are still effective and help to reduce the network traffic and, on the other hand, the update propagation can work very fast because the TTL parameter changes at a certain time to very low values.

This combination of caching and the fast propagation of dynamic updates helps to extend the features of a mapping service such as, e.g., the ENUM service and improve the level of scalability. Additionally, there could be a mechanism for detecting that one or more values of a user will change frequently in the next time. If, e.g., from 10.00h to 15.00h, there has been not one dynamic update, but from 15.00h to 15.20h, there have been 5 updates, the updating instance decreases the TTL value to be able to propagate the changes in the user information faster.

These as well as further features and advantages of the invention will be better appreciated by reading the following detailed description of presently preferred exemplary embodiments taken in conjunction with accompanying drawings of which:
- Fig. 1: is a block diagram of a telecommunication network according to an embodiment of the invention.
- Fig. 2: is a message flow diagram according to an embodiment of the invention message.
- Fig. 3: is a block diagram giving details of elements of a telecommunication network according to another embodiment of the invention.

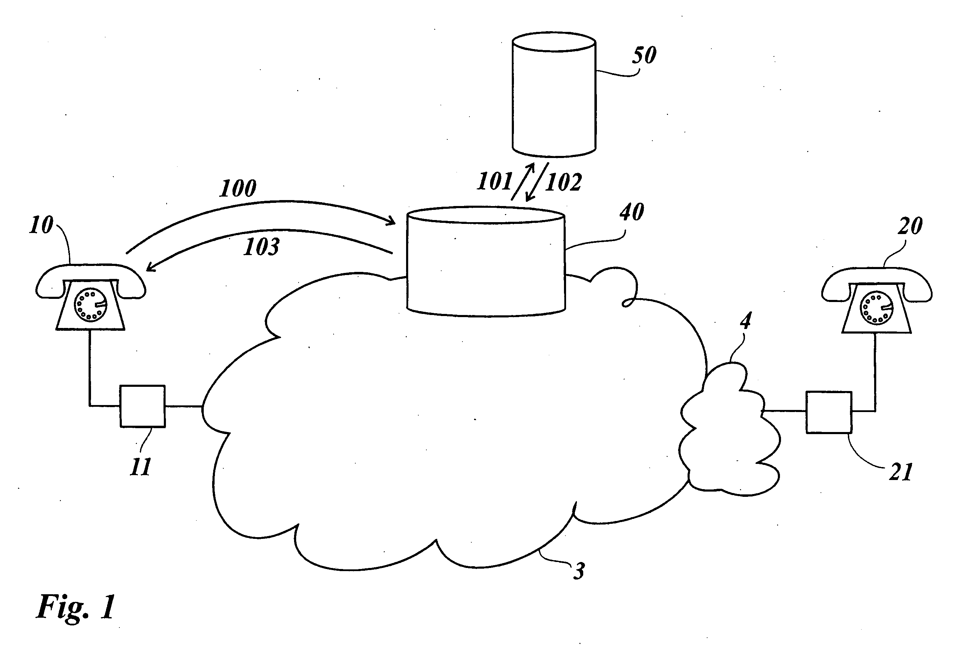

Fig. 1 shows a terminal 10 of a calling party, a terminal 20 of a called party, a telecommunication network 3, and a target telecommunication network 4 connecting the terminals 10 and 20. Between the telecommunication networks 3 and 4 and the terminals 10 and 20, each connection comprises an IP conversion unit 11, 21 for converting or encoding the terminal call signals to an IP standard. The telecommunication network 3 comprises a server 40 which provides an ENUM service. A data server 50 is in connection with the server 40. Preferably, the data server 50 is an integral part of the server 40 or in close connection to the server 40.

The terminals 10 and 20 may be telephone sets, preferably VolP phones, such as VolP softphones or hardphones (VoIP = Voice over IP). It is also possible that the terminals 10 and 20 are laptop computers, desktop workstations, mobile phones, PDAs, palmtops, pagers, or any other electronic devices which provide means for establishing a telecommunication connection (PDA = Portable Digital Assistant). In the following we assume that the terminals 10 and 20 are telephones.

The target network 4 is a network which serves the called phone 20 where a service request, e.g., a telephone call, originating from the calling phone 10 is targeted to.

Fig. 1 further shows an exemplary flow of messages. First, an IP query message 100 is sent from the phone 10 to the server 40, then a reference message 101 sent from the server 40 to the data server 50, a reply 102 related to the reference message 101 sent from the data server 50 to the server 40, and a reply 103 related to the IP query message 100 sent from the server 40 to the phone 10.

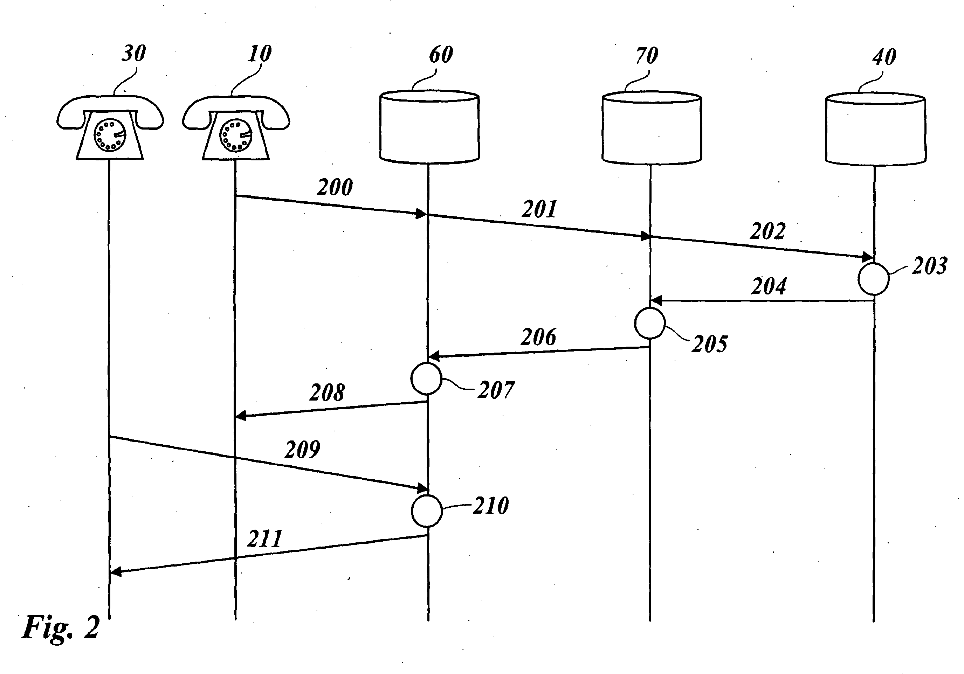

Fig. 2 shows a message flow diagram which explains the flow of messages according to a first embodiment in more detail. The diagram shows a first client 10, e.g., a phone of a first calling party, a second client 30, e.g., a phone of a second calling party, an ENUM server 40 providing an ENUM service, and a first and a second routing server 60 and 70. The first client 10 requests a specific entry. For example, a calling user of the client 10 dials an E.164 telephone number assigned to another client, e.g., a telephone set of a called user. According to the known conversion mechanism for converting the dialled E.164 number, the E.164 number is translated to a fully qualified domain name. This domain name represents the address where an ENUM query has to be sent to for looking up a list of resources or services associated with the E.164 number, e.g. fax number, a mobile phone number, an email address, an internet home page address.

Let us assume that the ENUM query is to be sent to the ENUM server 40. To reach this destination, the ENUM query is routed via a first routing server 60 and a second routing server 70 in a hop-by-hop manner, i.e., from one network element to the next netwok element, through the telecommunication network 3 to the corresponding ENUM server 40. This is shown in the diagram by the message arrows 200 to 202. The received ENUM query 202 triggers the ENUM server 40 to refer to a user profile associated with the dialled E.164 number. The user profile may be stored in a user profile unit contained in the ENUM server 40. The look-up process is shown as step 203.

Apart from prior art ENUM entries representing a user subscription that might, e.g., look like
10 10 u sip+E2U !^.*$!sip:lab@ngn.iiil
i.e., a SIP URI named lab@ngn.iii, the following examples show additional content for an ENUM service that allows new services or simplifies/expands existing services (SIP = Session Initiation Protocol).

The calling client 10 or a server acting on behalf of the calling client 10 may receive an address where he retrieves a ringback tone currently preferred by the called client. The corresponding additional new line in the extended ENUM service might, e.g., look like:
// for ringbacktone:
10 10 u sip+UP !^.*$!rback:www.ringtones.de/crazyfrog.mp3!

Additional services may reflect other user preferences. For example, a user may define a priority list specifying the devices he would like to be called on in a specific order. In the morning until 8.00h, when the user is most probably at home, the user may want to be called first on his home phone, second on his mobile phone and third on his office phone; from 8.00h to 8,30h, when the user is on his way to the office, the user may define the priority order as mobile phone, office phone and last the home phone; then after 8.30h, the user will probably be at his desk so that his preferred sequence of ringing will be: office phone, mobile phone and home phone. The user defines such a list and stores it on the ENUM server 40.

Other services rely on user presence information, i.e., the personalized information may define the location and availability of a user, e.g., if the user is in a conference. It is also possible that routing information comprised within the personalized information is used, indicating preferred routing paths, Possibly also peering information determining the traffic exchange between Internet service providers (=ISPs) is defined by means of personalized information. Or the personalized information comprises individual btack/white/gray lists for classifying an incoming call. The personalized information may also comprise environmental information, e.g., a terminal currently used by the user, in connection with other environmental or localization information, e.g., the fact that the user is driving a car. For example, the user may have indicated in his personalized information that he does not want to receive video data when driving a car, and this refusal is considered by the service.

According to a preferred embodiment of the present invention, the TTL value is set dynamically according to a fitting algorithm. For example, if a change in an entry is known to be at a certain time, the TTL value can decrease periodically. Preferably, the adaptation of the TTL value is executed with consideration of user habits detected over a long term period or at the moment.

Once the TTL value associated with an ENUM entry in the ENUM server 40 has been adjusted in accordance with the user profile, data of the ENUM entry relevant for the ENUM query are returned to the requesting client 10 as response messages 204, 206 and 208. On their way from the ENUM server 40 to the client 10, the response to the ENUM query passes one or more routing servers 60, 70 where the relevant data of the ENUM entry are cached in the caches of the routing servers 60, 70 in steps 205, 207.

The cached ENUM entry data are kept in the caches of the routing servers 60, 70 until the time period indicated by the TTL value has expired. After the expiration, the cached entry is deleted from the cache. If another client 30; asks for the same entry and sends another ENUM query 209 referring to the same ENUM entry while a routing server 60, 70 holds the corresponding ENUM entry data in their cache, the routing server 60 routing the ENUM query 209 to the ENUM server 40 recognizes in step 210 that the ENUM query 209 relates to the cached ENUM entry and responds to the ENUM query 209 instead of forwarding the ENUM query 209. Thus, the ENUM query 209 is immediately answered by means of a message 211 comprising the relevant ENUM entry data which is returned to the requesting client 30.

According to the invention, the time period while keeping ENUM entry data in the cache is determined by the TTL value associated with the ENUM entry whereby the TTL value is set dynamically under consideration of user-specific information.

An ENUM domain can contain quite a number of user information. Among them there will be some that may vary frequently. That may be important for presence information, user profiles that refer to a certain time (like call me on my home phone after 18.00h only), changing IP addresses or proxies and many others.

For example, a presence service is based on a DNS system architecture with dynamic updates. The system has found out that the user usually tends to go home at 18.00h, Fridays at 15.00h. Going home means for the presence service to change one or more values in the DNS entry or to change a priority of values in the DNS entry. According to the user habits, the system changes a TTL value. For example, the system may decrease the TTL value of the DNS entry before the user is expected to leave the office. If the user profile specifies that a change in the user's location or preference will happen at 18.00h, the DNS entry will have a TTL of 30 minutes until 17.30h, At this time, a dynamic update sets the TTL to 5 minutes and at 17.55h to one minute,

In another example, the system can vary the TTL value from 1 sec to 30 minutes. If the DNS entry is not changed, the system decides that it is a candidate for being a long term entry. So it increases the TTL value periodically until it is at a value of 30 minutes. But if the entry is changed frequently, the system will decrease the TTL value until it is at 1 second.

It is not only the original ENUM server 40 which may adjust a TTL value but the TTL value may also be adjusted by any of the caching servers 60, 70. It is important to note that the caching server 60, 70 has to reduce his TTL values according to the time he has cached a response 204, 206. For example if it receives a response 204, 206 with a TTL of 30 minutes, has it cached for 20 minutes and gets a request 209, this answer 211 to this request 209 has to contain a TTL of 10 minutes, and not 30 minutes!

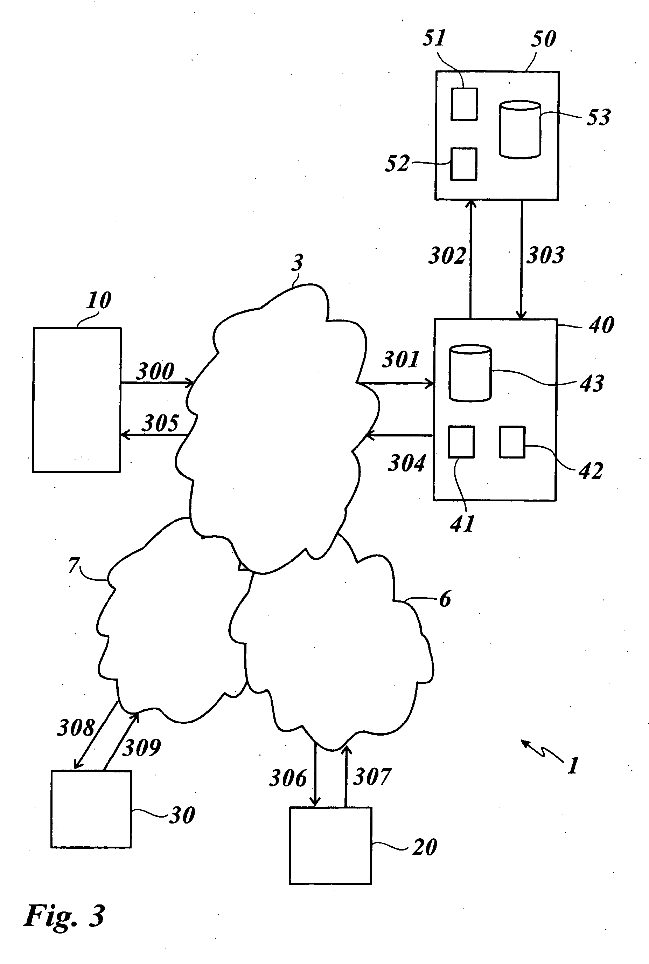

Fig. 3 shows details of a telecommunication system according to the invention. A client 10 is connected to a telecommunication system 1 comprising telecommunication networks 3, 6, 7 operated by different operators. The telecommunication system 1 further comprises a server 40 and a user information unit 50. The server 40 is an ENUM server, i.e., a DNS-based server, answering ENUM requests.

The server 40 is composed of one or several interlinked computers, i.e., a hardware platform, a software platform basing on the hardware platform and several application programs executed by the system platform formed by the software and hardware platform. The functionalities of the server 40 are provided by the execution of these application programs. The application programs or a selected part of these application programs constitute a computer software product providing an ENUM service as described, when executed on the system platform. Further, such computer software product is constituted by a storage medium storing these application programs or said selected part of application programs.

From a functional point of view, the server 40 comprises an interface 41 for exchanging data with other entities connected to the networks 3, 6 and 7, a control unit 42 for controlling the functions of the server 40 and a memory unit 43 for storing ENUM data.

The user information unit 50 comprises an interface 51 for exchanging data with other entities connected to the network 3.6 and 7, a control unit 52 for controlling the functions of the user information unit 50 and a memory unit 53 for storing user specific data. The user information unit 50 may be a stand-alone unit of the networks 3, 6 and 7 or it may be a unit dependent on or implemented into the server 40. In Fig. 3, the user information unit 50 is represented as a stand-alone unit which is in connection with the server 40.

Between the client 10, the networks 3, 6 and 7, the server 40 and the user information unit 50, messages 300 to 309 can be exchanged. If a user of the client 10 wants to define his user profile, the user triggers the client 10 to request a user profile form from the user information unit 50. The user will fill out the form and send the form back to the user information unit 50, thus providing the user information unit 50 with personalized information. It is also possible that the user information unit 50 gathers user-specific personalized information of a user by observing the user's behaviour and creating a user profile from the observation data.

If an ENUM request must be responded to, the server 40 contacts the user information unit 50 for retrieving user-specific personalized information and adjusting the TTL value of the ENUM response in accordance with the retrieved user-specific personalized information.

The ENUM service provided by the server 40 and the user information unit 50 is provided across operator borders. The ENUM service is provided in response to service requests related to any of the networks 3, 6 and 7. For example, if the client 10 wants to receive ENUM data associated with another client 20 connected to the network 6 operated by a specific operator, the server 40 and the user information unit 50 will be provide the relevant ENUM service as well as when there is a service request with regard to another client 30 operated by another operator of the network 7. In general, the ENUM service according to the present invention is provided in a cross-operator environment.

In another preferred embodiment, the service according to the present invention is not provided by one server but by two or more servers, e.g., one server executing the adjustment of the TTL values and another server in charge of providing other services according to the personalized information, such as meeting user preferences with regard to ringing priorities in case a user wishes a specific ringing order of his end devices to be met. For example, first a user's mobile phone should ring, if the user does not answer the call at his mobile phone, his desktop phone should ring, if the user does not answer the call at his desktop phone another user's device should ring, etc. The division of the service into two or more different servers may be advantageous, e,g., if the TTL value does not depend on the priority of the end devices, only, but is also dependent on other parameters.

## Claims

1. A method of providing a telecommunication service within telecommunication networks (3, 4) adapted for communication using an Internet protocol, the method comprising the steps of:
sending an Internet protocol query message (100) to query information associated with a target telecommunication network (4) from a distributed information system;
receiving in response to the Internet protocol query message (100) a uniform resource indicator (103) associated with the target telecommunication network (4); and
invoking a telecommunication service from the target telecommunication network (4) using the uniform resource indicator,
**characterised in**
**that** the method comprises the further step of controlling a time-to-live value of the requested information for a caching or a replication mechanism of the distributed information system dynamically by using personalized information related to the requested information.

2. The method of claim 1,
**characterised in**
**that** the method comprises the further steps of:
retrieving personalized information related to the requested information; adaptating said time-to-live value under consideration of the validity of said requested information determined by means of the retrieved personalized information; and
associating the adapted time-to-live value with the requested information.

3. The method of claim 1,
**characterised in**
**that** the method comprises the further steps of:
associating at a first server (40) a user profile to a telephone number mapping entry, the user profile comprising personalized information; and
establishing the response to the query dynamically based on the personalized information.

4. The method of claim 1,
**characterised in**
**that** the method comprises the further steps of:
dynamically adjusting the time-to-live value of a telephone number mapping entry on a first server (40) based on said personalized information;
on arrival of a related Internet protocol query message at said first server (40), replying to said query message and caching the telephone number mapping entry on one or more servers (60, 70) of the distributed information system;
holding the telephone number mapping entry in the cache of the one or more servers (60, 70) of the distributed information system during a time period indicated by the time-to-live value and replying to another related Internet protocol query message (209) based on the cached telephone number mapping entry;
after the time period indicated by the time-to-live value has expired, deleting the telephone number mapping entry from the cache of the one or more servers (60, 70) and routing another related Internet protocol query message to the first server (40).

5. The method of claim 1,
**characterised in**
**that** the personalized information comprises one or more of the following user-specific data: individual ringtones and/or ringbacktones, user preferences, user presence information, time dependent routing and/or peering information, individual black/white/gray lists.

6. The method of claim 1,
**characterised in**
**that** the method comprises the further steps of:
determining for the requested information a currently valid mapping entry in dependence on the personalized information;
providing the uniform resource indicator (103) in response to the Internet protocol query message (100) in accordance with said valid mapping entry; and
setting the time-to-live value dynamically according to a fitting algorithm, the fitting algorithm taking into account the remaining span of time the mapping entry stays valid, which is calculated based on the personalized information and adjustment parameters whereby the adjustment parameters follow a pre-defined default pattern or are individually defined by the personalized information.

7. The method of claim 1,
**characterised in**
**that** the method comprises the further step of:
selecting a mapping entry related to the received Internet protocol query message;
determining a scheduled change of said mapping entry according to a user profile comprising said personalized information;
calculating a remaining span of time until the scheduled change occurs; and
adjusting the time-to-live value to a decreased value when the remaining span of time falls below a pre-defined threshold value.

8. The method of claim 1,
**characterised in**
**that** said distributed information system is a Dynamic Delegation Discovery System or a Domain Name System.

9. A server (40) for providing a telecommunication service within telecommunication networks (3, 4) adapted for communication using an Internet protocol, the server (40) comprising an interface (41) adapted to receive an Internet protocol query message (100) to query information associated with a target telecommunication network from a distributed information system and a control unit (42) adapted to provide in response to the Internet protocol query message (100) a uniform resource indicator associated with the target telecommunication network (4) wherein said uniform resource indicator is used for invoking a telecommunication service from the target telecommunication network (4),
**characterised in**
**that** the control unit (42) is further adapted to control dynamically a time-to-live value of the requested information for a caching or a replication mechanism of the distributed information system by using personalized information related to the requested information.

10. A computer program product for providing a telecommunication service within telecommunication networks (3, 4) adapted for communication using an Internet protocol, whereby the computer program product, when executed by a server (40), performs the steps of:
receiving an Internet protocol query message (100) to query information associated with a target telecommunication network from a distributed information system;
providing in response to the Internet protocol query message (100) a uniform resource indicator associated with the target telecommunication network (4) wherein said uniform resource indicator is used for invoking a telecommunication service from the target telecommunication network (4),
**characterised in**
**that** the computer program product performs the further step of controlling a time-to-live value of the requested information for a caching or a replication mechanism of the distributed information system dynamically by using personalized information related to the requested information.

## Patentansprüche

1. Ein Verfahren der Bereitstellung eines Telekommunikationsdienstes innerhalb der Telekommunikationsnetze (3, 4), die zur Kommunikation unter Verwendung eines Internet-Protokolls angepaßt sind, wobei das Verfahren die Schritte umfaßt:
Senden einer Internet-Protokoll-Abfragenachricht (100), um Informationen, die mit einem Zieltelekommunikationsnetz (4) verbunden sind, von einem verteilten Informationssystem abzufragen;
Empfangen als Antwort auf die Internet-Protokoll-Abfragenachricht (100) eines einheitlichen Ressourcenindikators (103), der mit dem Zieltelekommunikationsnetz (4) verbunden ist; und
Aufrufen eines Telekommunikationsdienstes von einem Zieltelekommunikationsnetz (4) unter Verwendung des einheitlichen Ressourcenindikators,
**dadurch gekennzeichnet,**
**daß** das Verfahren den weiteren Schritt der Steuerung eines Lebensdauerwertes der angeforderten Informationen für einen Caching- oder einen Replikationsmechanismus des verteilten Informationssystems dynamisch durch Verwendung personalisierter Informationen umfaßt, die die angeforderten Informationen betreffen.

2. Das Verfahren nach Anspruch 1,
**dadurch gekennzeichnet,**
**daß** das Verfahren die weiteren Schritte umfaßt:
Abrufen personalisierter Informationen, die die angeforderten Informationen betreffen;
Anpassen des Lebensdauerwertes unter Berücksichtigung der Gültigkeit der angeforderten Informationen, die mittels der abgerufenen personalisierten Informationen bestimmt wurden; und
Verbinden des angepaßten Lebensdauerwertes mit den angeforderten Informationen.

3. Das Verfahren nach Anspruch 1,
**dadurch gekennzeichnet,**
**daß** das Verfahren die weiteren Schritte umfaßt:
Verbinden auf einem ersten Server (40) eines Benutzerprofils mit einem Telefonnummer-Mappingeintrag, wobei das Benutzerprofil die personalisierten Informationen umfaßt;
und
Aufbauen der Antwort auf die Abfrage dynamisch auf der Basis der personalisierten Informationen.

4. Das Verfahren nach Anspruch 1,
**dadurch gekennzeichnet,**
**daß** das Verfahren die weiteren Schritte umfaßt:
dynamisches Einstellen des Lebensdauerwertes eines Telefonnummer-Mappingeintrags auf einem ersten Server (40) auf der Basis der personalisierten Informationen;
beim Eintreffen einer betreffenden Internet-Protokoll-Abfragenachricht am ersten Server (40), Rückmeldung an die Abfragenachricht und Caching des Telefonnummer-Mappingeintrags auf einem oder mehr Servern (60, 70) des verteilten Informationssystems;
Halten des Telefonnummer-Mappingeintrags im Cache-Speicher des einen oder mehr Server (60, 70) des verteilten Informationssystems während einer Zeitperiode, die durch den Lebensdauerwert angegeben ist, und Rückmeldung an eine andere betreffende Internet-Protokoll-Abfragenachricht (209) auf der Basis des im Cache-Speicher gespeicherten Telefonnummer-Mappingeintrags;
nach Ablauf der durch den Lebensdauerwert angegebenen Zeitperiode, Löschen des Telefonnummer-Mappingeintrags aus dem Cache-Speicher des einen oder mehr Server (60, 70) und Routing einer anderen betreffenden Internet-Protokoll-Abfragenachricht an den ersten Server (40).

5. Das Verfahren nach Anspruch 1,
**dadurch gekennzeichnet,**
**daß** die personalisierten Informationen eine oder mehr der folgenden benutzerspezifischen Angaben umfassen: einzelne Ruftöne und/oder Rückruftöne, Benutzerberechtigungen, Benutzeranwesenheitsinformationen, zeitabhängige Routing-und/oder Peeringinformationen, einzelne Schwarz/Weiß/Grau-Listen.

6. Das Verfahren nach Anspruch 1,
**dadurch gekennzeichnet,**
**daß** das Verfahren die weiteren Schritte umfaßt:
Bestimmen für die angeforderten Informationen eines aktuell gültigen Mappingeintrags in Abhängigkeit von den personalisierten Informationen;
Bereitstellen des einheitlichen Ressourcenindikators (103) als Antwort auf die Internet-Protokoll-Abfragenachricht (100) gemäß dem gültigen Mappingeintrag; und
Einstellen des Lebensdauerwertes dynamisch gemäß einem Anpassungsalgorithmus, wobei der Anpassungsalgorithmus die restliche Zeitspanne berücksichtigt, die der Mappingeintrag gültig bleibt, was auf der Basis der personalisierten Informationen und der Einstellparameter berechnet wird, wodurch die Einstellparameter einem vordefinierten Standardmuster folgen oder einzeln durch die personalisierten Informationen definiert wurden.

7. Das Verfahren nach Anspruch 1,
**dadurch gekennzeichnet,**
**daß** das Verfahren die weiteren Schritte umfaßt:
Auswählen eines Mappingeintrags, der die empfangene Internet-Protokoll-Abfragenachricht betrifft;
Bestimmen einer planmäßigen Änderung des Mappingeintrags gemäß einem Benutzerprofil, das die personalisierten Informationen umfaßt;
Berechnen einer restlichen Zeitspanne bis die planmäßige Änderung eintritt;
und
Einstellen des Lebensdauerwertes auf einen verringerten Wert, wenn die restliche Zeitspanne unter einen vordefinierten Schwellenwert abfällt.

8. Das Verfahren nach Anspruch 1,
**dadurch gekennzeichnet,**
**daß** das verteilte Informationssystem ein Dynamic Delegation Discovery System oder ein Domain Name System ist.

9. Ein Server (40) zur Bereitstellung eines Telekommunikationsdienstes innerhalb der Telekommunikationsnetze (3, 4) die zur Kommunikation unter Verwendung eines Internet-Protokolls angepaßt sind, wobei der Server (40) eine Schnittstelle (41) umfaßt, die angepaßt ist, um eine Internet-Protokoll-Abfragenachricht (100) zu empfangen, um Informationen abzufragen, die mit einem Zieltelekommunikationsnetz verbunden sind, von einem verteilten Informationssystem, und eine Steuereinheit (42), die angepaßt ist, um als Antwort auf die Internet-Protokoll-Abfragenachricht (100) einen einheitlichen Ressourcenindikator bereitzustellen, der mit dem Zieltelekommunikationsnetz (4) verbunden ist, in welchem der einheitliche Ressourcenindikator zum Aufrufen eines Telekommunikationsdienstes vom Zieltelekommunikationsnetz (4) verwendet wird,
**dadurch gekennzeichnet,**
**daß** die Steuereinheit (42) außerdem angepaßt ist, um dynamisch einen Lebensdauerwert der angeforderten Informationen für einen Caching- oder einen Replikationsmechanismus des verteilten Informationssystems durch Verwendung der personalisierten Informationen zu steuern, die die angeforderten Informationen betreffen.

10. Ein Computerprogrammprodukt zur Bereitstellung eines Telekommunikationsdienstes innerhalb der Telekommunikationsnetze (3, 4), die zur Kommunikation unter Verwendung eines Internet-Protokolls angepaßt sind, wodurch das Computerprogrammprodukt, wenn es durch einen Server (40) ausgeführt wird, die Schritte durchführt:
Empfangen einer Internet-Protokoll-Abfragenachricht (100), um Informationen, die mit einem Zieltelekommunikationsnetz verbunden sind, von einem verteilten Informationssystem abzufragen;
Bereitstellen als Antwort auf die Internet-Protokoll-Abfragenachricht (100) eines einheitlichen Ressourcenindikators, der mit dem Zieltelekommunikationsnetz (4) verbunden ist, in welchem der einheitliche Ressourcenindikator zum Aufrufen eines Telekommunikationsdienstes vom Zieltelekommunikationsnetz (4) verwendet wird,
**dadurch gekennzeichnet,**
**daß** das Computerprogrammprodukt den weiteren Schritt der Steuerung eines Lebensdauerwertes der angeforderten Informationen für einen Caching- oder einen Replikationsmechanismus des verteilten Informationssystems dynamisch durch Verwendung der personalisierten Informationen durchführt, die die angeforderten Informationen betreffen.

## Revendications

1. Procédé permettant la fourniture d'un service de télécommunication à l'intérieur des réseaux de télécommunication (3, 4) adaptés pour la communication à l'aide d'un protocole Internet, le procédé comprenant les étapes suivantes :
envoyer un message de requête de protocole Internet (100) pour interroger les informations associées à un réseau de télécommunication cible (4) depuis un système d'information réparti ;
recevoir en réponse au message de requête de protocole Internet (100) un indicateur de ressource uniforme (103) associé au réseau de télécommunication cible (4) ; et
invoquer un service de télécommunication depuis le réseau de télécommunication cible (4) à l'aide de l'indicateur de ressource uniforme,
**caractérisé en ce que**
le procédé comprend les étapes supplémentaires de contrôle d'une valeur de durée de vie des informations demandées pour une mise en antémémoire ou un mécanisme de reproduction du système d'information réparti dynamiquement à l'aide des informations personnalisées associées aux informations demandées.

2. Procédé selon la revendication 1,
**caractérisé en ce que**
le procédé comprend les étapes suivantes :
extraire les informations personnalisées associées aux informations demandées ;
adapter ladite valeur de durée de vie en considérant la validité desdites informations demandées déterminées au moyen des informations personnalisées extraites ; et
associer la valeur de durée de vie adaptée aux informations demandées.

3. Procédé selon la revendication 1,
**caractérisé en ce que**
le procédé comprend les étapes supplémentaires suivantes :
associer au niveau d'un premier serveur (40) un profil d'utilisateur à une entrée de mise en correspondance de numéros de téléphone, le profil d'utilisateur comprenant les informations personnalisées; et
établir la réponse à l'interrogation basée dynamiquement sur les informations personnalisées.

4. Procédé selon la revendication 1,
**caractérisé en ce que**
le procédé comprend les étapes supplémentaires suivantes :
adapter dynamiquement la valeur de durée de vie d'une entrée de mise en correspondance de numéros de téléphone sur un premier serveur (40) sur la base desdites informations personnalisées ;
lors de l'arrivée d'un message de requête associé au protocole Internet au niveau dudit premier serveur (4.0), répondre audit message de requête et mettre dans l'antémémoire l'entrée de mise en correspondance de numéros de téléphone sur un ou plusieurs serveurs (60, 70) du système d'information réparti ;
conserver l'entrée de mise en correspondance de numéros de téléphone dans l'antémémoire d'un ou plusieurs serveurs (60, 70) du système d'information réparti pendant une période de temps indiquée par la valeur de durée de vie et
répondre à un autre message de requête de protocole Internet (209) sur la base de l'entrée de mise en correspondance de numéros de téléphone mise dans l'untémémoire ;
une fois que la période de temps indiquée par la valeur de durée a expiré, supprimer l'entrée de mise en correspondance de numéros de téléphone dans l'antémémoire d'un ou plusieurs serveurs (60, 70) et router un autre message de requête associé au protocole Internet au premier serveur (40).

5. Procédé selon la revendication 1,
**caractérisé en ce que**
les informations personnalisées comprennent une ou plusieurs des données suivantes spécifiques à l'utilisateur : différentes tonalités d'appel et/ou tonalités de retour d'appel, les préférences de l'utilisateur, les informations de présence de l'utilisateur, les informations de routage et/ou d'interconnexion de poste à poste dépendantes du temps, différentes listes noires/blanches/grises.

6. Procédé selon la revendication 1,
**caractérisé en ce que**
le procédé comprend les étapes supplémentaires suivantes:
déterminer pour les informations demandées une entrée de mise en correspondance actuellement valide en fonction des informations personnalisées
fournir l'indicateur de ressource uniforme (103) en réponse au message de requête de protocole Internet (100) conformément à ladite entrée de mappage valide ; et
fixer la valeur de durée de vie dynamiquement selon un algorithme d'adaptation, l'algorithme d'adaptation tenant compte de la période de temps résiduelle pendant laquelle l'entrée de mise en correspondance reste valide, laquelle est calculée sur la base des informations personnalisées et des paramètres d'adaptation, moyennant quoi les paramètres d'adaptation suivent un modèle par défaut prédéfini ou sont individuellement définis par les informations personnalisées.

7. Procédé selon la revendication 1,
**caractérisé en ce que**
le procédé comprend l'étape supplémentaire suivante :
choisir une entrée de mise en correspondance associée au message de requête de protocole Internet reçu ;
déterminer un changement planifié de ladite entrée de mise en correspondance selon un profil d'utilisateur comprenant lesdites informations personnalisées ;
calculer une période de temps résiduelle jusqu'à ce que le changement planifié se produise ; et
adapter la valeur de durée de vie à une valeur diminuée quand la période de temps résiduelle passe en-dessous d'une valeur de seuil prédéfinie.

8. Procédé selon la revendication 1,
**caractérisé en ce que**
ledit système d'information réparti est un Système de Découverte Dynamique par Délégation ou un Système de Noms de Domaine.

9. Serveur (4) permettant de fournir un service de télécommunication à l'intérieur des réseaux de télécommunication (3, 4) adaptés pour la communication à l'aide d'un protocole Internet, le serveur (40) comprenant une interface (41) adaptée pour recevoir un message de requête de protocole Internet (100) pour interroger les informations associées à un réseau de télécommunication cible d'un système d'information réparti et une unité de contrôle (42) adaptée pour fournir en réponse au message de requête de protocole Internet (100) un indicateur de ressource uniforme associé au réseau de télécommunication cible (4) dans lequel ledit indicateur de ressource uniforme est utilisé pour invoquer
un service de télécommunication depuis le réseau de télécommunication cible (4),
**caractérisé en ce que**
l'unité de contrôle (42) est en outre adaptée pour contrôler dynamiquement une valeur de durée de vie des informations pour une mise en antémémoire ou un mécanisme de reproduction du système d'information réparti en utilisant les informations personnalisées associées aux informations demandées.

10. Produit de programme informatique permettant de fournir un service de télécommunication à l'intérieur des réseaux de télécommunication (3, 4) adaptés pour la communication à l'aide d'un protocole Internet, moyennant quoi le produit de programme informatique, quand il est exécuté par un serveur (40), effectue les étapes suivantes :
recevoir un message de requête de protocole Internet (100) pour interroger les informations associées à un réseau de télécommunication cible d'un système d'information réparti ;
fournir en réponse au message de requête de protocole Internet (100) un indicateur de ressource uniforme associé au réseau de télécommunication cible (4) dans lequel ledit indicateur de ressource uniforme est utilisé pour invoquer un service de télécommunication depuis le réseau de télécommunication cible (4),
**caractérisé en ce que**
le produit de programme informatique effectue l'étape supplémentaire de contrôle d'une valeur de durée de vie des informations demandées pour une mise en antémémoire ou un mécanisme de reproduction du système d'information réparti dynamiquement en utilisant les informations personnalisées associées aux informations demandées.
